# EUROPÄISCHE PATENTSCHRIFT

(11) **EP 0 771 678 B1**
(45) Veröffentlichungstag und Bekanntmachung des Hinweises auf die Patenterteilung: **26.02.2003**
(21) Anmeldenummer: 96250247.2
(22) Anmeldetag: 30.10.1996
(51) Int. Cl.: B60B 3/04

(54) **Mehrteiliges geschweisstes Fahrzeugrad**
Multi-piece welded vehicle wheel
Roue de véhicule soudée à plusieurs parties

(30) Priorität: 01.11.1995 DE 19542280
(43) Veröffentlichungstag der Anmeldung: 07.05.1997
(73) Patentinhaber: Michelin Kronprinz Werke GmbH, 42697 Solingen (DE)
(72) Erfinder: Duning, Ralf, 42719 Solingen (DE); Gohrbandt, Uwe, 42781 Haan (DE); Bönning, Meinhard, 42697 Solingen (DE)
(74) Vertreter: Meissner, Peter E., Dipl.-Ing.

(56) Entgegenhaltungen:
- EP-A- 0 464 449
- EP-A- 0 505 879
- EP-A- 0 657 311
- WO-A-85/02586
- WO-A-95/18721
- DE-A- 1 913 599
- FR-A- 2 123 088
- US-A- 3 640 583

## Beschreibung

Die Erfindung betrifft ein zweiteiliges geschweißtes Fahrzeugrad mit einer profilierten Felge gemäß dem Gattungsbegriff des Hauptanspruches.

Ein derartiges Fahrzeugrad ist aus der EP 0 464 449 bekannt.

Ein weiteres zweiteilig geschweißtes Fahrzeugrad ist aus der EP 05 05 879 A1 bekannt. Es besteht aus einer profilierten mit einem Tiefbett versehenen Felge, die auf der Radinnenseite ein Felgenhorn aufweist und auf der Radaußenseite mit einer Schüssel verschweißt ist, die mehrere über den Umfang verteilt angeordnete Belüftungslöcher aufweist. Der äußere Randbereich der Schüssel ist als Freifläche ausgebildet und geht über in ein Horn, das äquivalent zu dem auf der Radinnenseite liegenden Felgenhorn ausgebildet ist. Auf der Innenseite zwischen Hom und Belüftungsloch ist die Schüssel mit einem axial nach innen sich erstreckenden Absatz versehen, auf dem der Endbereich der Felge zentriert werden kann. In dem Eckbereich zwischen Felgenende und Hornbereich einerseits und Unterseite der Felge und Absatz andererseits ist je eine Schweißnaht für die Verbindung zwischen Felge und Schüssel vorgesehen. Nachteilig bei dieser Konstruktion ist die aufwendige Herstellung der Schüssel, insbesondere was das Anarbeiten des Absatzes betrifft.

Ein mehrteiliges geschweißtes Fahrzeugrad ist in der EP 0 657 311 offenbart . Dieses Fahrzeugrad weist eine einstückig profilierte Felge auf, die auf der Radinnenseite mit einem Felgenhorn versehen ist und auf der Radaußenseite mit einer mehrteiligen Schüssel verschweißt ist. Der außenliegende Teilring der Schüssel weist mehrere über den Umfang verteilt angeordnete Belüftungslöcher auf, wobei dieser Bereich in Bezug auf die Radialachse geneigt ist Die Anbindung des Flansches an die Schüssel erfolgt unterhalb des Felgenhombereiches mittels einer Schweißnaht, wobei der äußere Randbereich der Felge radial einwärts umgebogen ist. Nachteilig bei dieser Konstruktion ist die Mehrteiligkeit der Schüssel und die fehlende Zentrierung zwischen Schüssel und Felge.

Der DE-OS 19 13 599 ist ein Fahrzeugrad zu entnehmen, das eine einstückige Felge und eine einstückige Schüssel aufweist. Um das als nicht vorteilhaft angesehene Verschweißen oder Vernieten der Schüssel mit der Felge zu vermeiden, wird vorgeschlagen, die beiden Bauteile über Klemmen miteinander zu verbinden. Dazu weist die Schüssel oder die Felge an ihrem äußeren Randbereich eine in Umfangsrichtung sich erstreckende Nase auf, über die der nachaußen liegende Randbereich der Felge bzw. der Schüssel klemmend gebördelt wird. Im Falle eines Stahlrades kann die Klemmverbindung durch Punktschweißen verstärkt werden.

Aufgabe der Erfindung ist es, ein zweiteiliges geschweißtes Fahrzeugrad , mit einer profilierten Feige anzugeben, das unter Beibehaltung einer großen Freifläche im äußeren Randbereich der Schüssel einfacher und kostengünstiger herstellbar ist.

Diese Aufgabe wird mit den Merkmalen des Patentanspruchs 1 gelöst.
Vorteilhafte Weiterbildungen sind Bestandteil von Unteransprüchen.

Das erfindungsgemäße Rad ist dadurch gekennzeichnet, dass der die Belüftungslöcher einschließende und bis zur Felge sich erstreckende radial äußere Randbereich der Schüssel in radialer Richtung annähernd eben ausgeführt ist und nach innen S-förmig gekrümmt in den Nabenbereich übergeht. Die Schweißverbindung zwischen Felge und Schüssel ist unmittelbar im Felgenhornbereich vorgesehen. Je nach Ausgestaltung kommt der äußerste Mantelbereich der Schüssel unterhalb des Felgenhornes und im Übergangsbereich zum Reifensitz zur Anlage, wobei der Endbereich des Felgenhornes über die Schüssel hinaus nach außen sich erstreckt.

Der Vorteil der vorgeschlagenen Konstruktion ist darin zu sehen, daß die Schüsselherstellung einfach ist und eine große Freifläche im äußersten Randbereich der Schüssel aufrechterhalten wird. Die Schweißnaht liegt von der Belastung her in einem unkritischen Bereich, so daß das Rad entsprechend große Traglasten übertragen kann. Die vorgeschlagene Konstruktion ist anwendbar auf alle üblichen Werkstoffe wie z.B. Stahl, aber insbesondere besonders geeignet für Leichtmetall. Dabei kann wahlweise die Radschüssel aus Guß oder sowohl die Felge als auch die Schüssel aus Band hergestellt sein. Auch eine Überkreuzkombination von beispielsweise Schüssel aus Leichtmetall und Felge aus Stahl ist möglich.

In der Zeichnung wird anhand mehrerer Ausführungsbeispiele die erfindungsgemäße Radkonstruktion näher erläutert. Es zeigen:
- Figur 1: im halbseitigen Teillängsschnitt eine erste Ausführungsform der erfindungsgemäßen Radkonstruktion;
- Figur 2: eine Ansicht in Richtung X in Figur 1;
- Figur 3: wie Figur 1 eine zweite Ausführungsform;
- Figur 4: wie Figur 1 eine dritte Ausführungsform.

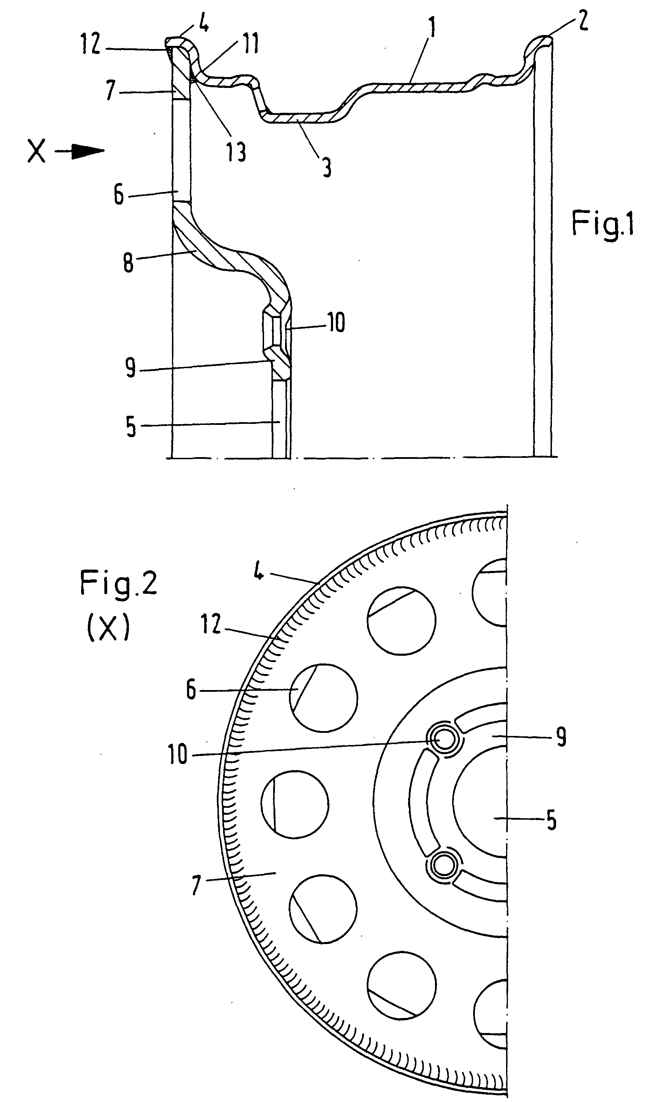

In Figur 1 ist in einem halbseitigen Teillängsschnitt und in Figur 2 eine Ansicht in Richtung X in Figur 1 eine erste Ausführungsform des erfindungsgemäßen Fahrzeugrades dargestellt. Das Fahrzeugrad weist eine profilierte Felge 1 auf, die auf der Radinnenseite mit einem üblichen Felgenhorn 2 versehen ist. In diesem Ausführungsbeispiel ist die Felge 1 mit einem ausgeprägten Tiefbett 3 und mit einem auf der Radaußenseite liegenden Felgenhorn 4 versehen. Die Radschüssel 5 erstreckt sich im Bereich der Belüftunglöcher 6 nahezu radial bis an die Felge 1 und weist im äußersten Randbereich eine große Freifläche 7 auf. Nach innen zu geht die Radschüssel 5 über einen S-förmig gekrümmten Bereich 8 in den Nabenbereich 9, der die bekannten Öffnungen 10 für die Befestigung des Rades an der Nabe bzw. Bremse aufweist. Der äußerste Mantelbereich der Radschüssel 5 kommt an der Unterseite des außenliegenden Felgenhornes 4 einerseits und an der Innenfläche des Überganges vom Felgenhorn 4 zum Reifensitz 11 andererseits zur Anlage. Der äußerste Randbereich des Felgenhornes 4 erstreckt sich über die Radschüssel 5, wobei bei einer Variante dieser Radausführungsform in diesem Bereich eine Schweißnaht 12 vorgesehen ist. Bei einer zweiten Variante ist auf dem innenliegenden Eckbereich eine weitere Schweißnaht 13 vorgesehen. Um den Sitz und die Dauerhaltbarkeit dieses Fahrzeugrades zu verbessern, wird außerdem vorgeschlagen, daß der Durchmesser des äußersten Mantelbereiches der Radschüssel 5 größer ist als der Innendurchmesser der Unterseite des Felgenhornes 4, so daß beim Zusammenbau ein Preßsitz entsteht.

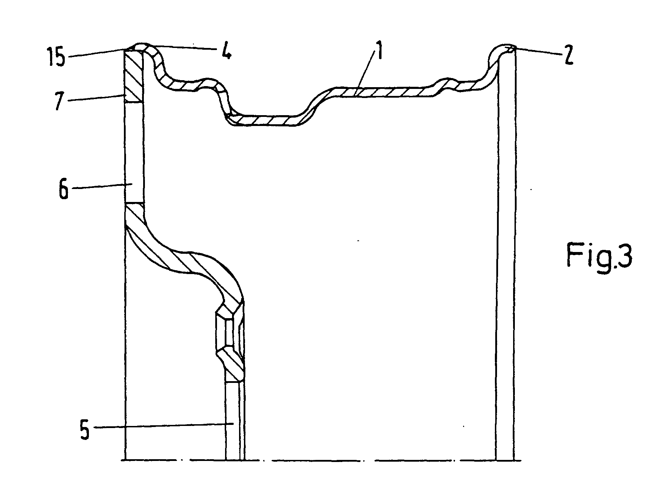

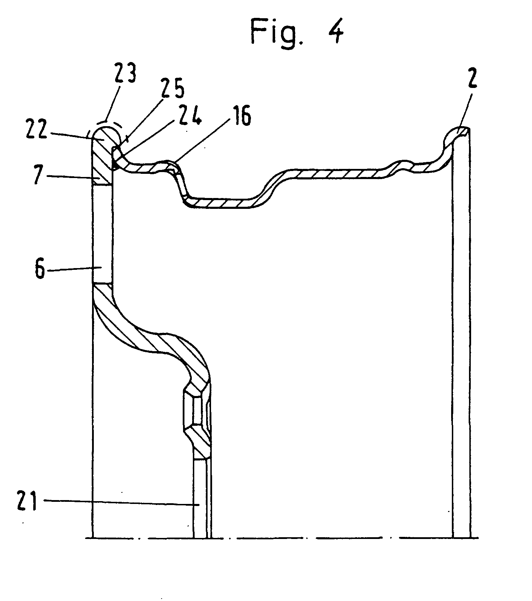

In den nachfolgenden Figuren 3 und 4 sind im gleichen Teillängsschnitt wie Figur 1 weitere Ausführungsformen dargestellt, wobei für gleiche Teile gleiche Bezugszeichen verwendet worden sind.

Bei der Ausführungsform gemäß Figur 3 erstreckt sich der äußerste Mantelbereich der Radschüssel 5 ebenfalls bis an die Unterseite des außen liegenden Felgenhornes 4. Im Unterschied zu Figur 1 überdeckt der äußere Randbereich des Felgenhornes 4 nur einen Teil des äußersten Mantelbereiches der Radschüssel 5. In dem freiliegenden Bereich ist die Verbindungsschweißnaht 15 vorgesehen. Falls erforderlich, muß der Endbereich mechanisch bearbeitet werden, damit eine abgerundete Radkontur entsteht.

Eine weitere Variante zeigt Figur 4. In diesem Ausführungsbeispiel ist der äußerste Mantelbereich der Radschüssel 21 so ausgebildet, daß die vorgeschriebene felgenhornartige Kontur 22 gleich mit angeformt ist. Durch die gestrichelte Linie 23 soll angedeutet werden, daß dieser Bereich auch größer ausfallen kann, so daß eine entsprechende mechanische Bearbeitung erforderlich ist. Die Schweißnahtverbindung 24 liegt im Eckbereich auf der Innenseite des Rades. Zusätzlich kann auf der Außenseite im äußersten Stoßbereich eine Heftnaht 25 vorgesehen werden.

## Patentansprüche

1. Zweiteiliges geschweißtes Fahrzeugrad mit einer profilierten Felge, die mindestens auf der Radinnenseite ein Felgenhorn aufweist und auf der Radaußenseite mit einer Schüssel verschweißt ist, die mehrere über den Umfang verteilt angeordnete Belüftungslöcher aufweist und deren radial äußerer außerhalb der Belüftungslöcher liegender Randbereich als Freifläche ausgebildet ist, und der der Außenseite des Fahrzeugrades zugewandte äußere Bereich der Felge zentrierend an der Schüssel zu Anlage kommt,
**dadurch gekennzeichnet,**
**dass** der die Belüftungslöcher (6) einschließende und bis zur Felge (1,16) sich erstreckende radial äußere Randbereich der Schüssel (5,21) in radialer Richtung annähernd eben ausgeführt ist und nach innen hin S-förmig (8) gekrümmt in den Nabenbereich übergeht und die Schweißverbindung (12,13,15,18,20,24,25) unmittelbar im Felgenhornbereich (4) vorgesehen ist.

2. Zweiteiliges geschweißtes Fahrzeugrad nach Anspruch 1,
**dadurch gekennzeichnet,**
**dass** der radial äußerste Mantelbereich der Schüssel (5) unterhalb des Felgenhornes (4) und im Übergangsbereich zum Reifensitz (11) der Felge (1) zur Anlage kommt und der Endbereich des Felgenhornes (4) über die Schüssel (5) hinaus nach außen sich erstreckt und im außenliegenden Eckbereich zwischen Unterseite Felgenhorn (4) und Außenfläche Schüssel (5) die Schweißverbindung (12) angeordnet ist.

3. Zweiteiliges geschweißtes Fahrzeugrad nach Anspruch 2,
**dadurch gekennzeichnet,**
**dass** im innenliegenden Eckbereich zwischen Unterseite Felge (1) und Innenfläche Schüssel (5) eine weitere Schweißnaht (13) vorgesehen ist.

4. Zweiteiliges geschweißtes Fahrzeugrad nach Anspruch 2 oder 3,
**dadurch gekennzeichnet,**
**dass** Schüssel (5) und Felge (1) im Verbindungsbereich einen Preßsitz aufweisen.

5. Zweiteiliges geschweißtes Fahrzeugrad nach Anspruch 1,
**dadurch gekennzeichnet,**
**dass** der äußerste Mantelbereich der Schüssel (5) unterhalb des Felgenhornes (4) zur Anlage kommt und der Endbereich des Felgenhornes (4) nur ein Teilbereich der äußersten Mantelfläche der Schüssel (5) überdeckt und auf der freiliegenden Mantelfläche der Schüssel (5) die Schweißverbindung (15) angeordnet ist.

6. Zweiteiliges geschweißtes Fahrzeugrad nach Anspruch 1,
**dadurch gekennzeichnet,**
**dass** der äußerste Mantelbereich der Schüssel (21) die Krümmung eines Felgenhornes (22) aufweist und auf der Innenfläche der Schüssel (21) der Übergangsbereich vom Reifensitz zum Felgenhorn (22) der Felge (16) zur Anlage kommt und im innenliegenden Eckbereich zwischen Innenfläche Schüssel (21) und Innenfläche Übergangsbereich die Schweißverbindung (24) angeordnet ist.

## Claims

1. Two-piece welded vehicle wheel with a shaped rim which has, at least on the inner side of the wheel, a rim bead, and which is welded on the outer side of the wheel to a bowl which has several ventilation holes distributed around its circumference and whose edge area - lying radially outside the ventilation holes - is in the form of an open surface, and the outer part of the rim - that faces the outside of the vehicle wheel - rests in a centred manner against the bowl,
**characterised in that**
the radially outer edge area of the bowl (5, 21), which surrounds the ventilation holes (6) and extends to the rim (1, 16), is almost flat in the radial direction, and is bent inwards in an S shape (8) as it blends into the hub area, and the welded joint (12, 13, 15, 18, 20, 24, 25) is directly in the area of the rim bead (4).

2. Two-piece welded vehicle wheel as in Claim 1,
**characterised in that**
the radially outermost wall area of the bowl (5) rests below the rim bead (4) and in the area of transition of the rim (1) to the tyre seat (11), and the end part of the rim bead (4) extends outwards beyond the bowl (5), and the welded joint (12) is positioned in the exterior comer area between the underside of the bead rim (4) and the outer surface of the bowl (5).

3. Two-piece welded vehicle wheel as in Claim 2,
**characterised in that**
there is another welded seam (13) in the interior corner area between the underside of the rim (1) and the inner surface of the bowl (5).

4. Two-piece welded vehicle wheel as in Claim 2 or 3,
**characterised in that**
there is a press fit between the bowl (5) and the rim (1) in the area of the connection.

5. Two-piece vehicle wheel as in Claim 1,
**characterised in that**
the outermost wall area of the bowl (5) rests beneath the rim bead (4), and the end part of the rim bead (4) overlaps only a part of the outermost wall surface of the bowl (5), and the welded joint (15) is positioned on the exposed wall area of the bowl (5).

6. Two-piece welded vehicle wheel as in Claim 1,
**characterised in that**
the outermost wall area of the bowl (21) has the curvature of a rim bead (22), and the transition area from the tyre seat to the rim bead (22) of the rim (16) rests on the inner surface of the bowl (21), and the welded joint (24) is positioned in the interior corner area between the inner surface of the bowl (21) and the inner surface of the transition area.

## Revendications

1. Roue de véhicule soudée en deux parties, comportant une jante profilée, qui présente, au moins sur la face interne de la roue, un bord de jante et, sur la face externe de la roue, est soudée à un plat qui présente plusieurs prises d'air agencées de façon répartie sur la périphérie et dont la zone de bord, radialement externe, se trouvant à l'extérieur des prises d'air, est réalisée comme surface libre, et la zone externe, en regard de la face externe de la roue de véhicule, de la jante vient en appui contre le plat pour le centrage,
**caractérisée en ce que** la zone de bord radialement externe, comportant les prises d'air (6) et s'étendant jusqu'à la jante (1, 16), du plat (5, 21) est réalisée, en direction radiale, approximativement de façon plane et, vers l'intérieur, se convertit de façon cintrée en forme de S (8) en la zone de moyeu, et la liaison par soudure (12, 13, 15, 18, 20, 24, 25) est prévue directement dans la zone (4) du bord de jante.

2. Roue de véhicule soudée en deux parties selon la revendication 1,
**caractérisée en ce que** la zone d'enveloppe radialement la plus externe du plat (5) vient en appui au-dessous du bord de jante (4) et dans la zone de transition vers le siège de pneu (11) de la jante (1), et la zone d'extrémité du bord de jante (4) s'étend vers l'extérieur au-delà du plat (5) et la liaison de soudure (12) est agencée dans la zone de coin externe entre le dessous du bord de jante (4) et la surface externe du plat (5).

3. Roue de véhicule soudée en deux parties selon la revendication 2,
**caractérisée en ce qu'**un autre cordon de soudure (13) est prévu dans la zone de coin interne entre le dessous de la jante (1) et la surface interne du plat (5).

4. Roue de véhicule soudée en deux parties selon la revendication 2 ou 3,
**caractérisée en ce que** le plat (5) et la jante (1) présentent, dans la zone de liaison, un ajustage serré.

5. Roue de véhicule soudée en deux parties selon la revendication 1,
**caractérisée en ce que** la zone d'enveloppe la plus externe du plat (5) vient en appui au-dessous du bord de jante (4) et la zone d'extrémité du bord de jante (4) ne recouvre qu'une zone partielle de la surface d'enveloppe la plus externe du plat (5), et la liaison de soudure (15) est agencée sur la surface d'enveloppe libre du plat (5).

6. Roue de véhicule soudée en deux parties selon la revendication 1,
**caractérisée en ce que** la zone d'enveloppe la plus externe du plat (21) présente la courbure d'un bord de jante (22) et la zone de transition du siège de pneu vers le bord de jante (22) de la jante (16) vient en appui sur la surface interne du plat (21) et la liaison de soudure (24) est agencée dans la zone de coin interne entre la surface interne du plat (21) et la surface interne de la zone de transition.
